# EUROPEAN PATENT SPECIFICATION

(11) **EP 2 657 567 B1**
(45) Date of publication and mention of the grant of the patent: **28.06.2017**
(21) Application number: 10861196.3
(22) Date of filing: 22.12.2010
(51) Int. Cl.: F16F 15/134, F16D 13/64

(54) **TORSIONAL VIBRATION ATTENUATION APPARATUS**
TORSIONSSCHWINGUNGS-DÄMPFUNGSVORRICHTUNG
DISPOSITIF D'AMORTISSEMENT D'UNE VIBRATION DE TORSION

(43) Date of publication of application: 30.10.2013
(73) Proprietor: TOYOTA JIDOSHA KABUSHIKI KAISHA, Toyota-shi, Aichi-ken, 471-8571 (JP)
(72) Inventor: TAKENAKA, Tetsuhiro, Toyota-shi, Aichi-ken, 471-8571 (JP); KURIMOTO, Tomoyasu, Toyota-shi, Aichi-ken, 471-8571 (JP); OKANO, Nobuhiko, Toyota-shi, Aichi-ken, 471-8571 (JP); HAGINO, Yasuyuki, Toyota-shi, Aichi-ken, 471-8571 (JP); WATARAI, Shinichiro, Toyota-shi, Aichi-ken, 471-8571 (JP)
(74) Representative: Kuhnen & Wacker
(86) International application number: PCT/JP2010/007416
(87) International publication number: WO 2012/085966

(56) References cited:
- DE-A1-102008 033 777
- DE-A1-102009 007 373
- DE-A1-102009 035 914
- JP-A- 57 173 620
- JP-A- 2001 074 102
- JP-A- 2008 304 008
- JP-U- H0 458 642

## Description

### {TECHNICAL FIELD}

The present invention relates to a torsional vibration attenuation apparatus, and more particularly to a torsional vibration attenuation apparatus which comprises a first rotation member and a second rotation member intervening between an internal combustion engine and a driving system, wherein the first rotation member and the second rotation member are relatively rotatably connected with each other through a resilient member, so that a rotational torque is transmitted between the first rotation member and the second rotation member.

### {BACKGROUND ART}

As a torsional vibration attenuation apparatus of this type, there has so far been known a torsional vibration attenuation apparatus which comprises a drive source such as an internal combustion engine, an electric motor and the like, and driven wheels drivably connected with the drive source to be driven by the rotational torque transmitted from the drive source. The conventional torsional vibration attenuation apparatus is adapted to absorb the torsional vibrations between the drive source and a drive system having transmission gear sets.

The known torsional vibration attenuation apparatus is constituted for example by a first rotation member adapted to be selectively coupled with or released from a drive source side flywheel, a second rotational member connected with an input shaft forming part of a transmission, and a resilient member having the first rotation member and the second rotation member circumferentially resiliently connected with each other (see for example Patent Document 1).

The first rotation member is constituted by a clutch disc, and a pair of disc plates provided radially inwardly of the clutch disc, while the second rotation member is partly constituted by a hub not rotatably connected with the input shaft of the transmission and disposed between the disc plates.

The hub has a cylindrical boss splined to the input shaft and a disc-like flange radially outwardly extending from the boss. The resilient member is constituted by a coil spring accommodated in a window hole formed in the flange and having circumferential both end portions supported on the circumferential both ends of the window hole and on the circumferential both ends of additional window holes respectively formed in the pair of disc plates.

The known torsional vibration attenuation apparatus previously mentioned is constructed to have the coil spring circumferentially compressed between the clutch disc and the pair of disc plates and the hub when the clutch disc and the pair of disc plates and the hub are relatively rotated with each other, thereby making it possible to absorb and attenuate the torsional vibrations inputted to the second rotation member from the first rotation member.

On the other hand, it is well known in the art that there are generated abnormal noises at the idling time of a vehicle, and abnormal noises and muffled noises at the travelling time of the vehicle as transmission side noises generated by the torsional vibrations. It is therefore required to suitably set the torsional property of the torsional vibration attenuation apparatus in order to absorb the torsional vibrations leading to the generation of the above abnormal noises.

Here, the abnormal noises generated at the idling time of the vehicle are known to be constituted by what is called clattering noises, one kind of abnormal noises emitted as being "clattering" caused by the collisions of the gear pairs with no load. Those noises are generally caused by torsional vibrations originated from the rotational fluctuation caused by the torque fluctuation of the driving source at the idling time of the vehicle immediately after being speed changed to the neutral.

Further, the abnormal noises generated at the travelling time of the vehicle are known to be constituted partly by what is called chinking noises, one kind of abnormal noises emitted as being "chinking" from the collisions of the slipping gear pairs of the transmission gear sets caused by the torsional vibrations originated from the rotational fluctuation in response to the torque fluctuation of the driving source and caused by the torsional resonance of the driving system during the acceleration and deceleration of the vehicle.

In addition, the muffled noises are known as one kind of abnormal noises to be generated in the passenger room by the vibrations caused by the torsional resonance of the driving system originated from the torque fluctuation of the driving system. The torsional resonance of the driving system is usually caused at the normal travelling operation (for example around 2,000 rpm of the rotational speed of the internal combustion engine), so that there is caused muffled noises in the passenger room at the normal travelling operation.

One of the conventional torsional vibration attenuation apparatuses having a torsional property suitably set is known for example by the following Patent Document 2.

The known torsional vibration attenuation apparatus disclosed in the Patent Document 2 comprises a first rotation member integrally rotated with the internal combustion engine, a second rotation member coaxially and relatively rotatably disposed with the first rotation member, and a displacement member relatively displaced with the second rotation member. The displacement member is formed in the first rotation member and has a contact portion moving along the contacted surface constituted to have the curvature varied in response to the relative rotation angle of the driving rotation member and the driven rotation member. The relative displacement of the displacement member is performed by the contact portion moving along the contacted surface in response to the relative rotation of the first rotation member and the second rotation member. The known torsional vibration attenuation apparatus further comprises a resilient member compressed in response to the relative displacement of the displacement member.

The torsional vibration attenuation apparatus is so constituted that when the internal combustion engine is driven, the first rotation member is rotated to transmit the rotational torque to the second rotation member through the resilient member. When the first rotation member and the second rotation member are relatively rotated with each other by the torque fluctuation of the internal combustion engine, the contact portion of the displacement member is moved along the contacted surface, thereby causing a relative displacement of the displacement member with respect to the other one of the first rotation member and the second rotation member.

The relative displacement of the displacement member causes the resilient member to be compressed, so that the torque fluctuation of the internal combustion engine is absorbed when the torque is outputted from the first rotation member to the second rotation member.

In this way, the relative displacement of the displacement member in response to the torsion angle regulates the compression of the resilient member, thereby making it possible to regulate the torsion property by the displacement member, the contacted surface, and the resilient member.

For this reason, the torsional angle of the first rotation member and the second rotation member can be widened by the resilient member with a low rigidity, thereby making it possible to suppress the clattering noises from being generated through attenuating the vibrations by using the low-rigidity resilient member in the small torsional angle area, as seen from the vehicle shifted into the neutral state at the time of the idling state of the vehicle.

Further, in the area where the torsional angle of the first rotation member and the second rotation member is large, the chinking noises can be suppressed from being generated by obtaining the high-rigidity torsion property where the torque can be sharply raised by widening the torsional angle of the first rotation member and the second rotation member.

As a consequence, the relatively large torsional vibrations originated from the rotational fluctuation in response to the torque fluctuation of the driving source and the torsional resonance of the driving system can be attenuated, thereby making it possible to suppress the chinking noises caused by the collisions of the slipping gear pairs of the transmission gear sets and the muffled noises caused by the torsional resonance of the driving system.

Further, Patent Document 3 discloses a dual mass flywheel for a drivetrain of a motor vehicle. The dual mass flywheel comprises a primary flywheel mass and a secondary flywheel mass that can rotate relative to a rotary axis of the dual mass flywheel, and that can be rotationally elastically coupled to each other by a coupling device. The coupling device comprises at least two pivot levers associated with one of the two flywheel masses and interacting with a control profile associated with the other flywheel mass. The pivot levers are pretensioned by elastic elements against the control profile in a radial direction from the outside inward relative to the rotary axis. A central segment of each of the elastic elements is disposed inside of the control profile in the radial direction relative to the rotary axis.

In addition, Patent Document 4 shows a dual-mass flywheel, particularly for use in the drive train of a motor vehicle, comprising a primary flywheel and a secondary flywheel, which are rotatable relative to one another against the force of at least one bow spring. The problem of the narrowed interpretation of the transmission characteristic is solved in that a torque transmission from the primary flywheel to the secondary flywheel is carried out via at least one rocker arm arranged on the primary flywheel or on the secondary flywheel, wherein the rocker arm supports itself with a load arm on a cam disk arranged on the other flywheel and is operatively connected with a force arm to one spring end of the bow spring while the other spring end of the bow spring supports itself on the flywheel on which the cam disk is arranged.

Furthermore, Patent Document 5 discloses a device for balancing torque variations of a rotatable shaft. Said device is characterized by comprising at least one energy storage which exerts a torque on the shaft depending on a rotational position of the shaft.

### {CITATION LIST}

### {PATENT LITERATURE}

Patent Document 1: Japanese Patent Application Publication No. 2003-194095
Patent Document 2: Japanese Patent Application Publication No. 2001-74102
Patent Document 3: German Patent Application Publication No. DE 10 2009 007 373 A1
Patent Document 4: German Patent Application Publication No. DE 10 2009 035 914 A1
Patent Document 5: German Patent Application Publication No. DE 10 2008 033 777 A1

### {SUMMARY OF INVENTION}

### {SOLUTION TO PROBLEM}

The aforementioned conventional torsional vibration attenuation apparatus can lower the rigidity of the resilient member in an area where the chinking noises or muffled noises are generated by widening the torsion angle of the first rotation member and the second rotation member. However, the aforementioned conventional torsional vibration attenuation apparatus at the same time presents such a torsion property that the deflection amount (rigidity) of the resilient member is gently increased when the second rotation member is twisted with respect to the first rotation member, due to the constant curvature of the contacted surface.

For this reason, when a low rigidity resilient member is used for widening the angle of the first rotation member and the second rotation member, a large-sized resilient member must be used in order to increase the deflection amount of the resilient member in response to the widened angle of the torsional angle of the first rotation member and the second rotation member.

In other words, a large-sized resilient member must be used to secure a large resilient deformation of the resilient member, because it is necessary to twist the second rotation member with respect to the first rotation member to an area where chinking noises or muffled noises are generated.

Therefore, the space sufficient to accommodate the relatively large-sized resilient member must be secured in the first rotation member and the second rotation member, thereby leading to likely increasing the whole size of the torsional vibration attenuation apparatus.

The present invention has been made to overcome the previously mentioned conventional problems, and it is therefore an object of the present invention to provide a torsional vibration attenuation apparatus which can decrease the size of the resilient member so as to minimize the space for installation of the resilient member while attenuating the torsional vibrations in necessary areas, and thereby to prevent the size of the apparatus as a whole from being increased.

To achieve the above object, the torsional vibration attenuation apparatus according to the present invention comprises a first rotation member, a second rotation member disposed in coaxial relationship with the first rotation member, a resilient member disposed between the first rotation member and the second rotation member to be resiliently deformed between the first rotation member and the second rotation member when the first rotation member and the second rotation member are relatively rotated with each other, a cam member provided on either one of the first rotation member and the second rotation member and having a cam surface to be integrally rotated with either one of the first rotation member and the second rotation member, and a torque transmission member having one end portion held in contact with the cam surface and the other end portion held in engagement with an end portion in extending direction of the resilient member and is operative to transmit a rotation torque between the first rotation member and the second rotation member through a resiliently deformation of the resilient member caused by the one end portion moving along the cam surface when the first rotation member and the second rotation member are relatively rotated with each other, wherein the torque transmission member is intervened between the cam member and the resilient member, and the cam surface of the cam member having a curved surface comprising: two points of outer circumferential sections of a first circle provided on a center line extending longitudinally of the cum member to have a center common to the rotation center axis of the cam member, and outer circumstantial sections of forming parts of the second circles having respective centers spaced apart outwardly from the center of the first circle, the two points of outer circumferential sections of the first circle being connected with the outer circumferential sections forming parts of the second circles, each of the radii of the second circles being larger than the radius of the first circle. Further, the second rotation member has an outer peripheral portion formed with the cam member, and an inner peripheral portion formed with a boss member drivably connected with an input shaft forming part of a transmission provided in a driving system of a vehicle, the first rotation member being constituted by a pair of disc plates disposed between the axial both sides of the first rotation member and axially spaced apart at a predetermined interval with each other and fastened to each other, each of the disc plates being formed with an accommodation portion for accommodating therein the resilient member, and a pair of retaining members retaining the circumferential both end portions of the resilient member to have the resilient member supported on the circumferential both end portions of the accommodation portion, and the other end portion of the torque transmission member being held in engagement with the circumferential one end portion of the resilient member through either one of the retaining members. Furthermore, the torsional vibration attenuation apparatus comprises a hysteresis mechanism intervening between the cam member and the pair of the disc plates to have the cam member and the pair of the disc plates held in friction contact with each other.

By the construction as set forth in the above definition, the torsional vibration attenuation apparatus according to the present invention is so constructed that the cam surface of the cam member forms what is called a peanuts shape, because the cam surface includes a curved surface connecting a circumference of a first circle and a circumference of ach of a pair of second circles, the first circle having a rotational axis of the cam member formed on an axial line extending in a longitudinal direction as a center of circle and a radius, and each of the second circles having a rotational axis spaced apart from the rotational axis outwardly in a direction of the axis line as a center of circle and a radius longer than the radius of the first circle.

For this reason, when the first rotation member and the second rotation member are relatively rotated with each other, the torque transmission member is slided along the cam surface, so that the cam surface urges the resilient member through the torque transmission member, and the torque transmission member presses the cam surface with the reaction force of the resiliently deformed resilient member, thereby making it possible to transmit the rotation torque between the first rotation member and the second rotation member.

In case that the aforementioned torsional vibration attenuation apparatus is intervened between the driving source of the vehicle and the transmission of the driving system including the transmission gear set, where the rotation torque from the driving source is transmitted to the first rotation member and the rotation torque is transmitted from the second rotation member to the transmission, during the period when the torsion angle of the first rotation member and the second rotation member is small, the one end of the torque transmission member comes into contact with the cam surface continued to the circumference of the second circle from the cam surface of the circumference of the first circle, thereby making it possible to lower the torsional rigidity of the first rotation member and the second rotation member.

This means that in the area where the rotation torque transmitted from the first rotation member to the second rotation member is small (for example when the rotation speed of the internal combustion engine is in the neighborhood of 1,000 rpm), as seen from the vehicle shifted into the neutral state at the time of the idling state of the vehicle, the torsional vibrations originated from the rotational fluctuation in response to the torque fluctuation of the internal combustion engine can be attenuated, thereby making it possible to suppress the clattering noises from being caused in the gear pairs of the transmission maintained in the no load state.

Further, in the area where the rotation torque transmitted from the first rotation member to the second rotation member is large (for example when the rotation speed of the internal combustion engine is in the neighborhood of 1,500 rpm), the torsional vibrations originated from the rotational fluctuation in response to the torque fluctuation of the internal combustion engine can be attenuated, thereby making it possible to suppress the chinking noises from the collisions of the slipping gear pairs of the transmission gear sets and the muffled noises caused by the torsional resonance of the driving system.

At this time, in the area of 1,500 rpm or higher where the chinking noises and the muffled noises are generated, the torsional rigidity of the first rotation member and the second rotation member can be reduced by having the one end of the torque transmission member held in engagement with the cam surface on the circumference of the second circle having the radius larger than the radius of the first circle, so that the chinking noises and the muffled noises can be suppressed.

Meanwhile, in the area between the idle area where the clattering noises are generated and the area where the chinking noises and the muffled noises are generated, it is not necessary to lower the rigidity of the resilient member.

The peanuts shape of the cam member allows the curvature of the cam surface continuing from the circumference of the first circle to the circumference of the second circle to be smaller than the curvature of the circumference of the second circle, thereby making it possible to increase the rigidity of the resilient member by abruptly increasing the deflection amount of the resilient member with respect to the change amount of the torsion angle of the first rotation member and the second rotation member when the one end of the torque transmission member came into contact with the cam surface of the circumference of the second circle from the cam surface of the circumference of the first circle.

Conventionally, the deformation amount of the resilient member against the deformation amount of the torsion angle, from the idle area where the clattering noises are generated to the area where the chinking noises and the muffled noises are generated, has been small. In contrast, however, in the present invention, the deformation amount of the resilient member against the deformation amount of the torsion angle from the idle area where the clattering noises are generated to the area where the chinking noises and the muffled noises are generated, is increased, so that the deformation amount of the resilient member against the change amount of the torsion angle ("rigidity") is decreased in the area where the chinking noises and the muffled noises are generated, thereby making it possible to keep the low rigidity of the resilient member.

Therefore, the resilient member can be prevented from being increased in size by increasing the resilient deformation amount of the resilient member in response to the fluctuation of the torsion angle taking place from the state where the torsion angle of the first rotation member and the second torsion member is small to the state where the torsion angle of the first rotation member and the second torsion member is large. In other words, it is not necessary to deform the resilient member gently, as conventionally, from the state where the torsion angle of the first rotation member and the second torsion member is small to the state where the torsion angle of the first rotation member and the second torsion member is large, so that it is not necessary any more to increase the size of the resilient member taking into consideration the amount of deformation.

As a consequence, the torsional vibration can be reduced by keeping the low rigidity of the resilient member in the necessary areas (the idle area where the clattering noises are generated and the area where the chinking noises and the muffled noises are generated), thereby making it possible to prevent the torsional vibration attenuation apparatus from being increased in size.

Further, by the construction as set forth in the above definition, the torsional vibration attenuation apparatus according to the present invention is so constituted that the resilient member is accommodated in the accommodation portion of each of the pair of disc plates, the circumferential both end portions of the resilient member are supported in the circumferential both end portions of the accommodation portion by the pair of the retaining members, and that the other end portion of the torque transmission member are held in engagement with the circumferential one end portion of the resilient member through the retaining member, thereby making it possible to decrease the rigidity of the resilient member through widening the scope of the torsion angle of the first rotation member and the second rotation member, with the result that the rotation torque is smoothly transmitted from the first rotation member to the second rotation member.

In addition, by the construction as set forth in the above definition, the torsional vibration attenuation apparatus according to the present invention is so constructed that the hysteresis mechanism intervening between the cam member and the pair of the disc plates makes it possible to increase the hysteresis torque of the cam member and the pair of the disc plates when the torsion angle of the cam member and the pair of the disc plates is large, thereby making it possible to suppress the chinking noises from the collisions of the slipping gear pairs of the transmission gear sets, and the muffled noises caused by the torsional resonance of the driving system, from being generated.

The torsional vibration attenuation apparatus may preferably be so constituted that the one end portion of the torque transmission member is moved from the cam surface of the circumference of the first circle to the cam surface of the circumference of the second circle, in response to an increased torsion angle of the first rotation member and the second rotation member.

By the construction as set forth in the above definition, the torsional vibration attenuation apparatus according to the present invention is so constituted that the one end portion of the torque transmission member is moved from the cam surface on the circumference of the first circle to the cam surface on the circumference of the second circle in response to the increase of the torsion angle of the first rotation member and the second rotation member, so that the one end portion of the torque transmission member is brought into engagement with the cam surface on the first circle in the state where the torsion angle of the first rotation angle and the second torsion angle is small, thereby making it possible to bring the one end portion of the torque transmission member into engagement with the cam surface on the first circle from the cam surface on the second surface in response to the increase of the torsion angle of the first rotation member and the second rotation member.

The peanuts shape of the cam member in this embodiment allows the curvature of the cam surface continuing from the circumference of the first circle to the circumference of the second circle to be smaller than the curvature of the circumference of the second circle, thereby making it possible to increase the rigidity of the resilient member by abruptly increasing the deflection amount of the resilient member with respect to the change amount of the torsion angle of the first rotation member and the second rotation member when the one end of the torque transmission member came into contact with the cam surface of the circumference of the second circle from the cam surface of the circumference of the first circle.

Further, since the radius of the second circle is constant, the rigidity of the resilient member can be reduced by decreasing the deflection amount of the resilient member with respect to the change amount of the torsion angle of the first rotation member and the second rotation member when the one end of the torque transmission is moved along the circumference of second circle as the torsion angle of the first rotation member and the second rotation member becomes larger.

The curvature of the cam surface continuing from the cam surface of the circumference of the first circle to the cam surface of the circumference of the second circle may preferably be smaller than the curvature of the cam surface of the circumference of the second circle.

By the construction as set forth in the above definition, the torsional vibration attenuation apparatus according to the present invention is so constituted that the curvature of the curved surface continuing from the cam surface of the circumference of the first circle to the cam surface of the circumference of the second circle is smaller than the curvature of the cam surface of the circumference of the second circle, so that the rigidity of the resilient member can be reduced by abruptly increasing the deflection amount of the resilient member with respect to the change amount of the torsion angle of the first rotation member and the second rotation member, when the one end portion of the torque transmission member is brought into engagement with the cam surface on the second circle from the cam surface on the first circle.

For this reason, it is not necessary to deform the resilient member gently from the state where the torsion angle of the first rotation member and the second torsion member is small to the state where the torsion angle of the first rotation member and the second torsion member is large, so that it is not necessary any more to increase the size of the resilient member taking into consideration the amount of deformation.

The torsional vibration attenuation apparatus may preferably be so constituted that the torque transmission member is swingable around a swing fulcrum portion provided on either one of the first rotation member and the second rotation member between the one end portion of the torque transmission member and the other end portion of the torque transmission member.

By the construction as set forth in the above definition, the above-mentioned torsional vibration attenuation apparatus according to the present invention can simplify the structure of the torsional vibration attenuation apparatus by disposing only the resilient member, torque transmission member and the cam member between the first rotation member and the second rotation member.

The torsional vibration attenuation apparatus may preferably comprise two or more torque transmission members, which are disposed in point symmetrical relationship with each other across the center axis of the first rotation member.

By the construction as set forth in the above definition, the torsional vibration attenuation apparatus according to the present invention is so constituted that the torque transmission members are disposed in point symmetrical relationship with each other across the central axis of the first rotation member, thereby the torque transmission members sandwich the cam members across the center axis of the first rotation member.

This means that when the cam member urges the resilient member through the torque transmission members, the torque transmission members, under the reaction force of the resilient member, sandwich the cam member across the center axis of the first rotation member with a strong pressing force. This further means that the rotation torque can be reliably transmitted between the first rotation member and the second rotation member, thereby making it possible to have the first rotation member and the second rotation member integrally rotate with each other.

(deleted)

(deleted)

The torsional vibration attenuation apparatus may preferably be so constituted that the other end portion of the torque transmission member is equipped with a roller element and is held in engagement with one of the pair of the retaining members through the roller element.

By the construction as set forth in the above definition, the torsional vibration attenuation apparatus according to the present invention is so constructed that, when the other end portion of the torque transmission member is moved radially inwardly of the first rotation member, as the torque transmission member is swung through the swinging fulcrum portion by rotation of the cam member, the other end of the torque transmission member can be brought in engagement with the retaining member through the roller element, thereby making it possible to resiliently deform the resilient member in the circumferential direction of the first rotation member by having the other end portion of the torque transmission member smoothly and radially slip along the one engagement surface of the retaining member through the roller element.

(deleted)

(deleted)

### {ADVANTAGEOUS EFFECTS OF INVENTION}

The torsional vibration attenuation apparatus according to the present invention can decrease the size of the resilient member, so as to minimize a space for installation while attenuating the torsional vibration in necessary areas, and thereby to prevent the size of the apparatus as a whole from being increased.

### {BRIEF DESCRIPTION OF DRAWINGS }

FIG. 1 is a view showing one preferred embodiment of a torsional vibration attenuation apparatus according to the present invention, and a front view of the torsional vibration attenuation apparatus.
FIG. 2 is a view showing the one preferred embodiment of the torsional vibration attenuation apparatus according to the present invention, and a cross-sectional view taken along the chain line and seen from the arrows A-A in FIG. 1.
FIG. 3 is a view showing the one preferred embodiment of the torsional vibration attenuation apparatus according to the present invention, and a fragmentally cross-sectional view taken along the chain line and seen from the arrows B-B in FIG. 2.
FIG. 4 is a view showing the one preferred embodiment of the torsional vibration attenuation apparatus according to the present invention, and a fragmentally cross-sectional view taken along the chain line and seen from the arrows C-C in FIG. 2.
FIG. 5 is a view showing the one preferred embodiment of the torsional vibration attenuation apparatus according to the present invention, and a plan view of an arm member forming part of the torsional vibration attenuation apparatus.
FIG. 6 is a view showing the one preferred embodiment of the torsional vibration attenuation apparatus according to the present invention, and a cross-sectional view taken along the chain line and seen from the arrows D-D in FIG. 5.
FIG. 7 is a view showing the one preferred embodiment of the torsional vibration attenuation apparatus according to the present invention, and illustrates a view for explaining the constitution elements of a cam member.
FIG. 8 is a view showing the one preferred embodiment of the torsional vibration attenuation apparatus according to the present invention, and is a front view of the cam member.
FIG. 9 is a view showing the one preferred embodiment of the torsional vibration attenuation apparatus according to the present invention, and is an exploded view showing a hysteresis mechanism.
FIG. 10 is a view showing the one preferred embodiment of the torsional vibration attenuation apparatus according to the present invention, and is a front view of the torsional vibration attenuation apparatus in the state where a boss is twisted in a positive side with respect to disc plates.
FIG. 11 is a view showing the one preferred embodiment of the torsional vibration attenuation apparatus according to the present invention, and is a front view of the torsional vibration attenuation apparatus in the state where the boss is twisted in a further positive side with respect to the disc plate.
FIG. 12 is a view showing the one preferred embodiment of the torsional vibration attenuation apparatus according to the present invention, and is a front view of the torsional vibration attenuation apparatus in the state where the boss is twisted in a negative side with respect to the disc plates.
FIG. 13 is a view showing the one preferred embodiment of the torsional vibration attenuation apparatus according to the present invention, and is showing a relationship between the torsion angle and the torque of the torsional vibration attenuation apparatus.
FIG. 14 is a view showing the one preferred embodiment of the torsional vibration attenuation apparatus according to the present invention, and is showing a relationship between the rotational speed and the torque fluctuation of the internal combustion engine.

### {DESCRIPTION OF EMBODIMENTS}

The preferred embodiment of the torsional vibration attenuation apparatus according to the present invention will be described hereinafter with reference to the accompanying drawings.

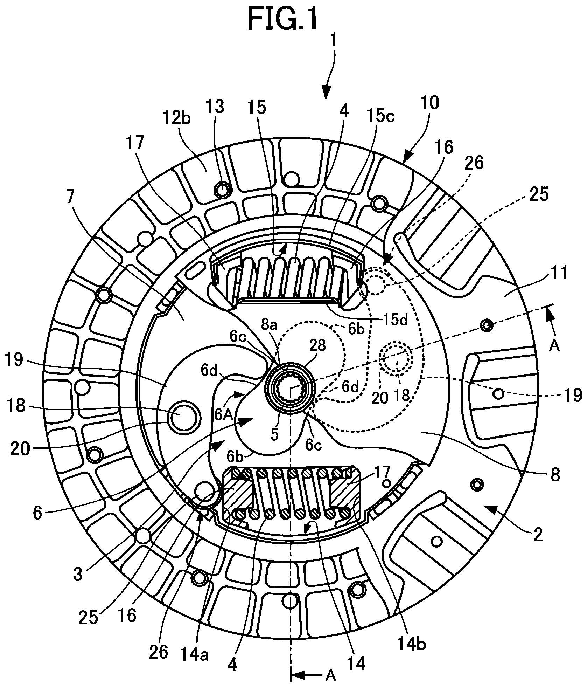

FIGS. 1 to 15 are views showing the one preferred embodiment of the present invention.

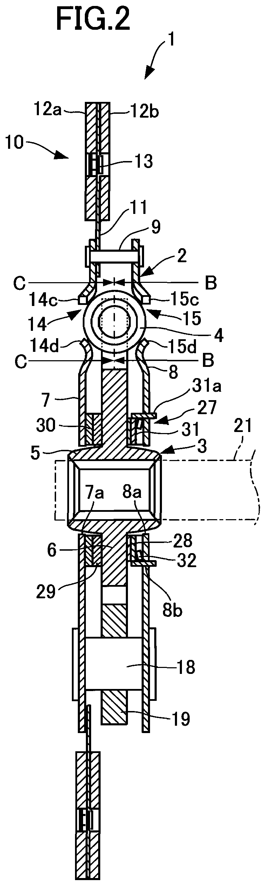

First, the construction of the embodiment of the torsional vibration attenuation apparatus according to the present embodiment will be explained hereinafter. The torsional vibration attenuation apparatus 1 is shown in FIGS. 1 and 2 to comprise a first rotation member 2 inputted with a rotational torque from an internal combustion engine not shown but constituting a drive source, and a second rotation member 3 disposed in coaxial relationship with the first rotation member 2 to output and transmit the rotational torque of the first rotation member 2 to a transmission forming part of a drive system not shown, a pair of resilient members constituted by a pair of coil springs 4 disposed between the first rotation member 2 and the second rotation member 3 to be capable of being compressed, viz., resiliently deformed in the circumferential direction of the first rotation member 2 when the first rotation member 2 and the second rotation member 3 are relatively rotated with each other.

The second rotation member 3 is constituted by a boss 5 constituting a second rotation member held in splined engagement with the outer peripheral portion of the input shaft 21 of the transmission of the drive system, and a cam member 6 provided on the outer peripheral portion of the boss 5

Here, the boss 5 and the cam member 6 may be integrally formed. Further, the boss 5 and the cam member 6 may be separately formed with the peripheral portion of the boss 5 having a splined portion and with the peripheral portion of the cam member 6 having a splined portion, the splined portion of the peripheral portion of the boss 5 being held in spline engagement with the splined portion of the peripheral portion of the cam member 6.

The first rotation member 2 is provided with a pair of disc plates 7, 8 and a clutch disc 10 constituting in combination a second rotation member. The disc plates 7, 8 are respectively disposed at the axial both sides of the boss 5 and spaced apart at a predetermined axial interval and connected with each other by pins 9 and a pin 18 serving as a swinging fulcrum portion.

Each of the disc plates 7, 8 has a cylindrical central bore 7a, 8a formed therein to receive the boss 5, so that the boss 5 is in coaxial relationship with the disc plates 7, 8.

The pins 9, 18 are bridged between and are supported on the disc plates 7, 8, and the disc plates 7, 8 can be reliably fastened with each other by the pins 9, 18 respectively have axially outer ends each having a large diameter to prevent the pins 9, 18 from being released from the disc plates 7, 8. This means that the disc plates 7, 8 are integrally connected with each other, and thus can be rotated together with each other.

The clutch disc 10 is provided at the radially outer end portion of the disc plate 7, and has a cushioning plate 11 and friction materials 12a, 12b. The cushioning plate 11 is constituted by a ring-shaped member waved in its thickness direction, and is secured to the disc plates 7, 8 by the pins 9.

The friction materials 12a, 12b are secured to the both surfaces of the cushioning plate 11 by rivets 13. The friction materials 12a, 12b are positioned between a flywheel not shown but secured to a crankshaft forming part of an internal combustion engine and a pressure plate of a clutch cover secured to the flywheel by bolts.

The friction material 12a, 12b are pressurized by the pressure plate to be brought into frictional engagement with the flywheel and the pressure plate, so that the rotational torque of the internal combustion engine can be inputted to the disc plates 7, 8.

In response to the depression of a clutch pedal not shown, the friction materials 12a, 12b are released from being pressurized by the pressure plate, thereby allowing the friction materials 12a, 12b to be spaced from the flywheel, so that the rotational torque of the internal combustion engine cannot be inputted to the disc plates 7, 8.

The disc plates 7, 8 are respectively formed with a pair of accommodation window holes 14, 15, respectively constituting accommodation portions, extending along the outer peripheral portions of the coil springs 4 and spaced apart from each other in the circumferential direction of the disc plates 7, 8 and in opposing relationship with each other in the axial direction of the disc plates 7, 8, so that the coil springs 4 can be accommodated in the window holes 14, 15, respectively.

The accommodation window holes 14, 15 are formed by punching along the outer peripheral portions of the coil springs 4 with a press machine, and are respectively closed at their both circumferential ends in the circumferential direction of the disc plates 7, 8.

As shown in FIGS. 2 to 4, the disc plates 7, 8 have respective outer support edge portions (accommodation portions) 14c, 15c circumferentially extending along the radially outer edge of the accommodation window hole 14 and respective inner support edge portions (accommodation portions) 14d, 15d circumferentially extending along the radially inner edge of the accommodation window hole 14. The outer support edge portions 14c, 15c and the inner support edge portions 14d, 15d expand axially outwardly.

Each of the coil springs 4 is retained at its circumferential both end portions by a pair of spring seats 16, 17 constituting a pair of retaining members as defined in the present invention. The spring seats 16, 17 respectively have inner peripheral surfaces each formed with an end coil.

The end coils are corresponding to one or two turns of the circumferential both end portions of the coil spring 4, and allow the circumferential both end portions of the coil spring 4 to seat thereon, so that the beginning end and the terminal end in the winding direction of the coil spring 4 can be engaged with the coil ends, thereby making it possible to prevent the coil spring 4 from being rotated and to have the coil spring 4 seated on the spring seats 16, 17.

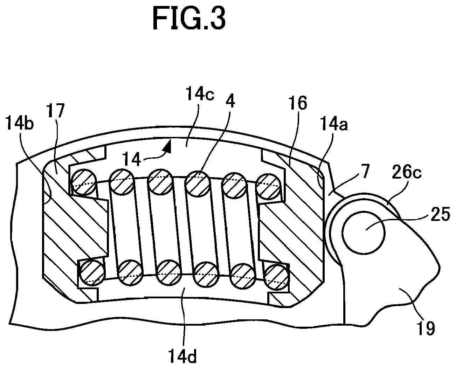

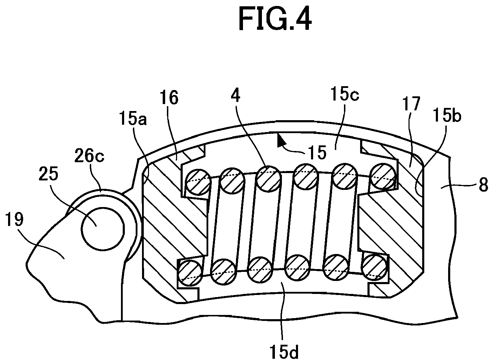

As shown in FIGS. 3, 4, the closed ends of the accommodation window holes 14, 15 in the circumferential direction of the disc plates 7, 8 constitute engagement portions 14a, 14b, 15a, 15b held in engagement with the circumferential end portions of the spring seats 16, 17, so that the circumferential end portions of the spring seats 16, 17 are engaged with the engagement portions 14a, 14b, 15a, 15b when the spring seats 16, 17 are circumferentially moved farthest away from each other.

The outer peripheral portions of the spring seats 16, 17 are in opposing relationship with and securely supported by the outer support edge portions 14c, 15c and the inner support edge portions 14d, 15d, so that the spring seats 16, 17 can be prevented from being dislocated from the accommodation window holes 14, 15 by the outer support edge portions 14c, 15c and the inner support edge portions 14d, 15d.

Between the circumferential one of the spring seats 16 and the cam member 6 is provided an arm member 19 which is disposed between the disc plates 7, 8 and swingably supported on the pin 18. Similarly, between the circumferential other of the spring seats 16 and the cam member 6 is provided an additional arm member 19 which is also disposed between the disc plates 7, 8 and swingably supported on the pin 18.

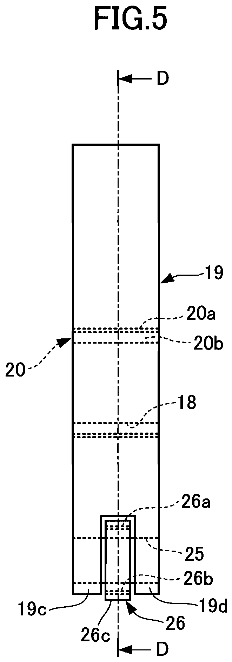

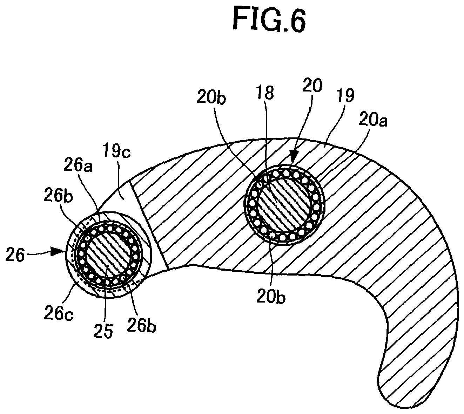

As shown in FIGS. 5, 6, a needle bearing 20 intervenes between the pin 18 and the arm member 19. As shown in FIG. 6, the needle bearing 20 is constituted by an outer race 20a securely mounted on the arm member 19, and needles 20b intervening between the outer race 20a and the pin 18. For this reason, the arm member 19 is rotatable with respect to the pin 18 and supported on the pin 18 through the needle bearing 20.

Further, the arm member 19 has one end portion formed with bifurcated projection portions 19c, 19d which are connected with each other by a pin 25. In other words, the pin 25 is supported on the projection portions 19c, 19d.

The pin 25 has a roller member 26 rotatably supported thereon. The roller member 26 constitutes a roller element as defined in the present invention. The roller member 26 is constituted by an outer race 26a provided on the outer peripheral portion of the pin 25, a needle bearing constituted by needles 26b intervening between the outer race 26a and the pin 25, and a roller 26c securely mounted on the outer peripheral portion of the outer race 26a, so that the roller 26c is rotatable with respect the pin 25 through the needle bearing.

The roller 26c is held in engagement with the circumferentially outer surface of the spring seat 16, so that the other end portion of the arm member 19 is engaged with the circumferentially outer surface of the spring seat 16 through the roller 26c.

In addition, the cam member 6 is formed in the shape of a peanut, and the cam surface of the cam member 6 is thus in the shape of a peanut.

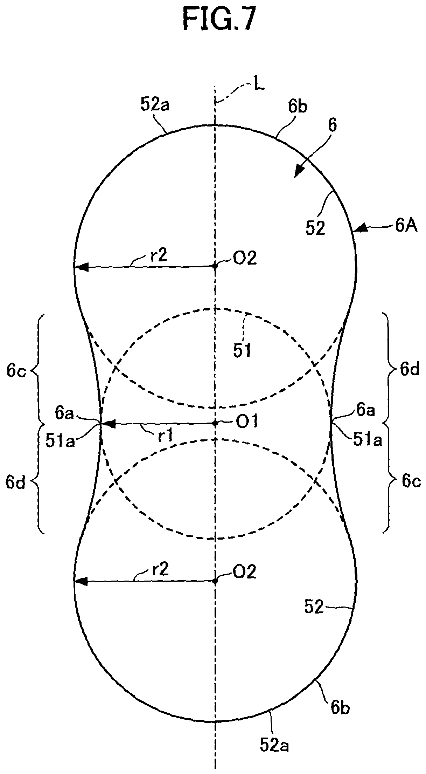

As shown in FIG. 7, the cam surface 6A of the cam member 6 has a peanut-shaped curved surface constituted by a pair of outer circumferential sections 51 a each partly formed by a first circle 51, and a pair of outer circumferential sections 52a each partly formed by a second circle 52. The outer circumferential sections 52a of the second circle 52 are thus connected with each other by the outer circumferential sections 51a of the first circle 51 to form the cam surface 6A of the cam member 6 in the shape of the peanut. The first circle 51 has a center O1 common to the rotation center axis of the cam member 6, and has a radius r1. Each of the two second circles 52 has respective center 02 equally spaced apart in the outward direction L from the center O1 of the first circle 51 on a straight line passing through the center O1 of the first circle 51, and each has a radius r2 larger than the radius r1 of the first circle 1. The radii r2 of the second circles 52 are the same in length.

The curvatures of the cam surface sections 6c, 6d continuously extending from the cam surface sections 6a of the outer circumferential sections 51a of the first circle 51 to the cam surface sections 6b of the outer circumferential sections 52a of the second circles 52 are each formed to be smaller than the curvature of the cam surface section 6b of the outer circumferential section 52a of the second circle 52.

In the present embodiment, the cam surface section 6a of the outer circumferential section 51a of the first circle 51 is positioned on only one point, whereas the cam surface sections 6b of the outer circumferential sections 52a of the second circles 52 are connected by the terminal ends of the cam surface sections 6c and 6d to circumferentially extend on the outer circumferential sections 52a of the second circles 52.

The arm members 19 are disposed in point symmetrical relationship with each other with respect to the center axis of the disc plates 7, 8, i.e., the rotation center axis O1 of the cam member 6, so that the arm members 19 are held in contact with the cam surface 6A across the rotation center axis O1 of the cam member 6.

In the present embodiment, when the torsion angle of the disc plates 7, 8 and the boss 5 is zero degree, the end portion of the arm member 19 is held in engagement with the cam surface 6A. At this time, the spaced-apart distance between the arm members 19 across the rotation center axis O1 is designed to be shortest.

In response to the increased torsion angle of the disc plates 7, 8 and the boss 5 from this state, viz., the state in which the torsion angle of the disc plates 7, 8 and the boss 5 is zero degree, the one end of the arm member 19 is moved from the cam surface section 6a on the first circle 51 toward the cam surface section 6b on the second circle 52. At this time, the arm member 19 is rotated around the pin 18.

In the present embodiment, the arm member 16 thus rotated makes displaceable the position of the cam surface 6A with which the one end of the arm member 19 held in engagement, thereby causing the spring seat 16 to be urged by the arm member 19, with the result that the compression amount of the coil spring 4 is increased. At this time, the spring seat 16 is moved toward and away from the spring seat 17 along the peripheral edges of the accommodation window holes 14, 15.

On the other hand, as shown in FIG. 2, a hysteresis mechanism 27 intervenes between the disc plates 7, 8 and the cam member 6, and is constituted by annular friction materials 28, 29, 30, 31 and a plate spring 32.

Each of the friction materials 28, 29 is constituted by a material having a surface with a predetermined coefficient of friction. The friction materials 28, 29 are adhered and fastened to the axial outer surfaces of the cam member 6 by an adhesive. Further, the friction materials 28, 29 may be fastened to the cam member 6 by providing pins integrally formed with the friction materials 28, 29, and fittingly engaged with pin holes formed on the axial outer peripheral portions of the cam member 6.

The friction material 30 is constituted by a material having a surface with a predetermined coefficient of friction. The friction material 30 is adhered and fastened to the inner peripheral surface of the disc plate 7 by an adhesive. Further, the friction material 30 may be firmly fastened to the disc plate 7 by pins integrally formed with the friction material 30 and fittingly engaged with pin holes formed on the inner peripheral portion of the disc plate 7.

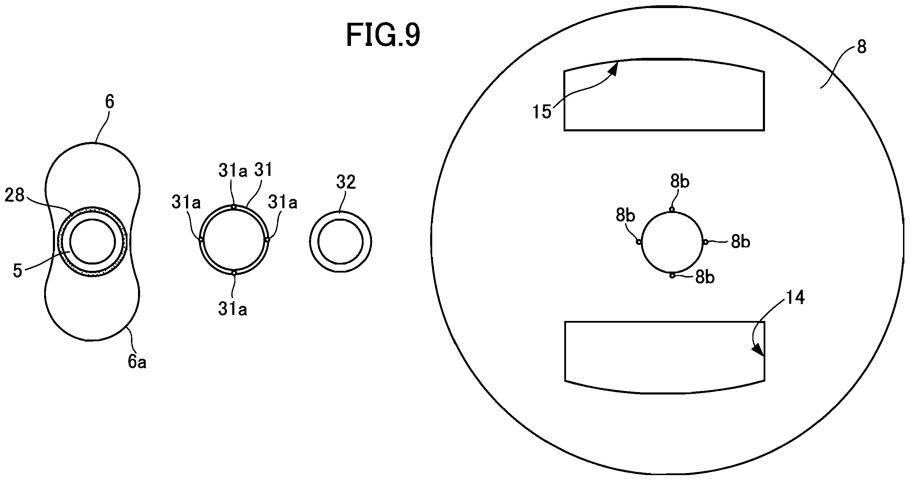

As shown in FIG. 9, the friction material 31 is constituted by a material having a surface with a predetermined coefficient of friction. The friction material 31 has a radially outer peripheral surface integrally formed with a plurality of pins 31 a. These pins 31a are fittingly engaged with pin holes 8b formed on the inner peripheral portion of the disc plate 8, so that the friction material 31 can be firmly fastened to the inner surface of the disc plate 8.

A plate spring 32 is formed in conical shape, and is provided to intervene between the friction member 31 and disc plate 8.

The plate spring 32 is capable of generating a resilient force in the axial direction of the cam member 6 to have the friction material 31 and the friction material 28 held in frictional contact with each other, and to have the friction material 29 and the friction material 30 also held in frictional contact with each other, so that the cam member 6 and the disc plates 7, 8 are held in frictional contact with each other, thereby generating a hysteresis torque between the cam member 6 and the disc plates 7, 8.

Further, the hysteresis mechanism may be constructed to have the friction materials 30, 31 held in direct frictional contact with the axial outer peripheral surfaces of the cam member 6 without using the friction materials 28, 29.

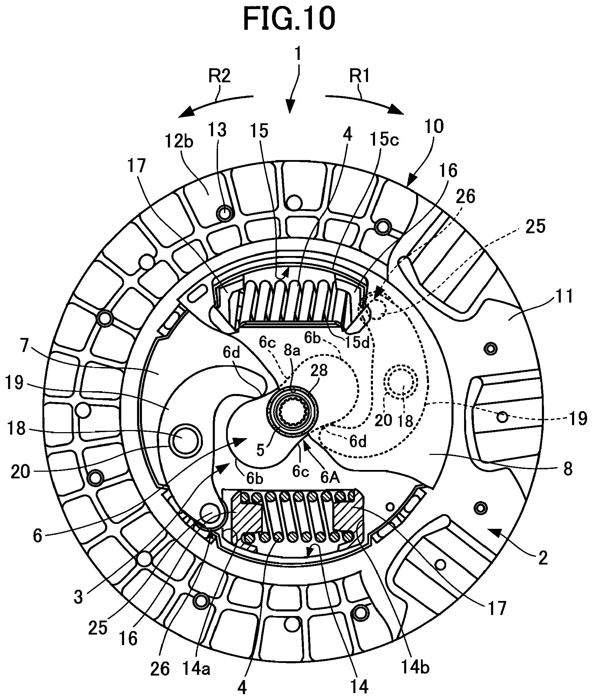

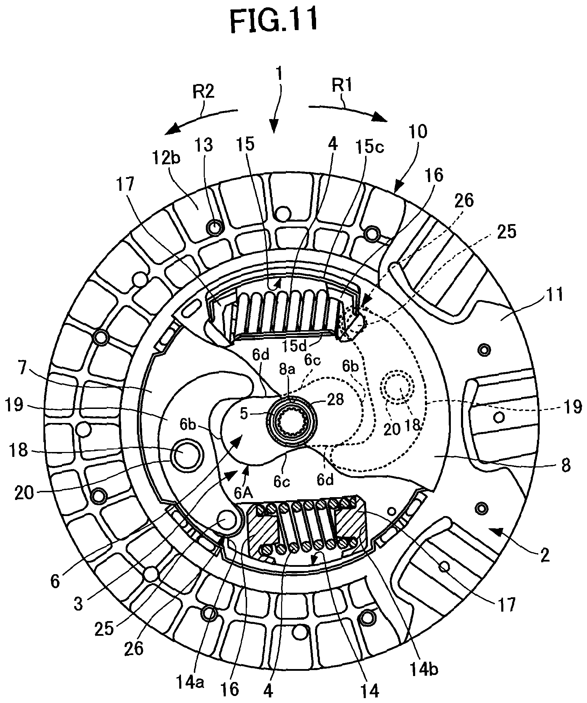

Next, the operation of the torsional vibration attenuation apparatus according to the present embodiment will be described hereinafter. FIGS. 10 and 11 show the states in which the disc plates 7, 8 receive the rotational torques from the internal combustion engine to be rotated in the anti-clockwise direction (R2 direction) from the state shown in FIG. 1. For the sake of convenience of explanation, the boss 5 will be explained as being twisted in a positive clockwise direction (R1 direction) with respect to the disc plates 7, 8.

Here, the state of the boss 5 twisted in the positive clockwise direction indicates a time when the vehicle is being accelerated. The friction materials 12a, 12b are pressed by the pressure plate to be brought into frictional engagement with the flywheel and the pressure plate, so that the rotational torque of the internal combustion engine is inputted to the disc plates 7, 8.

The torsional vibration attenuation apparatus 1 according to the present embodiment is, as shown in FIG. 1, operated to have the cam member 6 positioned at its initial position and rotated together with the boss 5 in the state that the disc plates 7, 8 and the boss 5 are rotated under a small relative rotation, viz., at a small torsion angle of the disc plates 7, 8 and the boss 5 in the vicinity of zero degree.

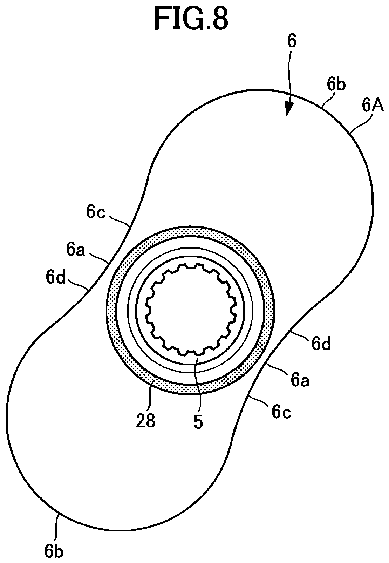

At this time, the one end of the arm member 19 is held in contact with the cam surface section 6a (See FIG. 8) of the cam member 6, so that the arm member 19 is pressed against the coil spring seat 16 by the cam member 6, thereby allowing the cam member 6 to urge the coil spring 4.

Further at this time, the arm member 19 is pivoted by the reaction force of the coil spring 4 around the pin 18 serving as a fulcrum under the principle of the lever to press the cam member 6. This means that the rotational torque of the disc plates 7, 8 is transmitted to the cam member 6 through the coil spring 4 and the arm member 19. For this reason, the rotational torque of the internal combustion engine is transmitted to the input shaft of the transmission. At this time, the compression amount of the coil spring 4 becomes small.

Therefore, the torsional vibrations of the disc plates 7, 8 and the boss 5 can be absorbed and attenuated while the power of the internal combustion engine is being transmitted from the disc plates 7, 8 to the boss 5.

When, on the other hand, there is caused a small rotational fluctuation by the torque fluctuation of the internal combustion engine at the acceleration time of the vehicle, the fluctuation torque between the disc plates 7, 8 and the boss 5 is small, whereupon the boss 5 is relatively rotated with respect to the disc plates 7, 8 in the clockwise direction (R1 direction).

When the cam member 6 is rotated in the R1 direction in response to the increased torsion angle of the disc plates 7, 8 and the boss 5 as in the state shown in FIG. 10 from the state shown in FIG. 1, the one end portion of the arm member 19 is moved along the cam surface section 6d having a smaller curvature than the curvature of the cam surface section 6b.

At this time, the one end of the arm member 19 is pressed against the cam surface section 6d, with the result that the other one end of the arm member 19 is moved radially inwardly and circumferentially of the disc plates 7, 8.

In response to the rotation of the cam member 6 in the R1 direction, the other end portion of the arm member 19 is moved radially inwardly of the disc plates 7, 8, thereby allowing the spring seat 16 to be moved toward the spring seat 17.

Further, the other end portion of the arm member 19 moved along the circumferential outer peripheral surface of the spring seat 16 through the roller 26c makes it possible for the spring seat 16 not to be prevented from being circumferentially moved.

This means that, as shown in FIGS. 3, 4, the circumferential one portion of the spring seat 17 is held in engagement with the engagement portions 14b, 15b, so that the spring seat 16 is moved toward the spring seat 17 along the peripheral edges of the accommodation window holes 14, 15 to compress the coil spring 4.

As previously mentioned, the arm member 19 is moved to urge the coil spring 4, thereby causing the arm member 19 to be pivoted by the reaction force of the coil spring 4 around the pin 18 serving as the fulcrum under the principle of the lever to press the cam member 6 with a strong pressing force.

At this time, the one end portion of the arm member 19 is held in contact with the cam surface section 6d of the cam member 6 short in width, so that the compression amount of the coil spring is reduced, thereby reducing the rigidity of the coil spring 19.

Therefore, in the areas where the rotation torque transmitted from the disc plates 7, 8 to the boss 5 is small, the torsional vibrations of the disc plates 7, 8 and the boss 5 can be absorbed and attenuated by the coil spring 4 with a low rigidity while the power of the internal combustion engine is being transmitted from the disc plates 7, 8 to the boss 5.

When there is caused a further large rotational fluctuation by the torque fluctuation of the internal combustion engine, the fluctuation torque between the disc plates 7, 8 and the boss 5 is increased, whereupon the boss 5 is further relatively rotated with respect to the disc plates 7, 8 in the clockwise direction (R1 direction).

When the torsion angle of the disc plates 7, 8 and the boss 5 is further increased as in the state shown in FIG. 11 from the state shown in FIG. 10, the one end portion of the arm member 19 is moved from the cam surface section 6d to the cam surface section 6b and brought into engagement with the cam surface section 6b.

Here, the curvature of the cam surface section 6b is larger than the cam surface section 6d, the arm member 19 is rotated in the clockwise direction at a larger rotation angle through the pin 18 when the one end portion of the arm member 19 is moved from the cam surface section 6d to the cam surface section 6b.

At this time, the arm member 19 is pressed against the coil spring seat 16 by the cam member 6, so that the coil spring 4 is compressed at a larger compression amount.

More specifically, when the one end portion of the arm member 19 is moved from the cam surface section 6d short in the width direction of the boss 5 and small in curvature to the cam surface section 6b long in the longitudinal direction of the boss 5 and large in curvature, the one end portion of the arm member 19 is brought in contact with the cam surface section 6b over the cam surface section 6d, so that the compression amount of the coil spring 4 with respect to the torsion angle of the disc plates 7, 8 and the boss 5 can be enlarged, thereby causing the rigidity of the arm member 19 to be increased.

At this time, the coil spring 4 pressed by the arm member 19 and the cam member 6 causes the reaction force against the arm member 19, so that the arm member 19 is pivoted around the pin 18 serving as the fulcrum under the principle of the lever and to press the cam member 6 with a strong pressing force.

When there is caused a further large rotational fluctuation by the torque fluctuation of the internal combustion engine, the fluctuation torque between the disc plates 7, 8 and the boss 5 is increased, whereupon the boss 5 is further relatively rotated with respect to the disc plates 7, 8 in the clockwise direction (R1 direction).

At this time, the one end portion of the arm member 19 is moved along the cam surface section 6b of the cam member 6 which is being pivoted. The cam surface section 6b is formed in the shape of a circle identical to the outer circumferential sections 52a of the second circle 52, so that the compression amount of the coil spring 4 with respect to the torsion angle of the disc plates 7, 8 and the boss 5 is gently increased, thereby causing the rigidity of the coil spring 4 to be decreased.

For this reason,, in an area where the torsion angle of the disc plates 7, 8 and the boss 5 is large, the coil spring 4 comes to be low in rigidity, thereby making it possible to absorb and attenuate the torsional vibrations of the disc plates 7, 8 and the boss 5 can be absorbed and attenuated, while the power of the driving system is being transmitted from the boss 5 to the disc plates 7, 8.

Also in this case, the other end portion of the arm member 19 moved along the circumferential outer peripheral surface of the spring seat 16 through the roller 26c makes it possible for the spring seat 16 not to be prevented from being circumferentially moved.

When the disc plates 7, 8 are inputted with the excessively large torque from the internal combustion engine, the one end portion of the arm member 19 slips over the cam surface section 6b to have the disc plates 7, 8 slip with respect to the cam member 6, thereby making it possible to have the cam member 6 function as a torque limiter at the acceleration time of the vehicle.

As a consequence, the excessively large torque from the disc plates 7, 8 is prevented from being transmitted to the boss 5, thereby making it possible to protect the transmission gear sets of the transmission.

Due to the fact that the hysteresis mechanism 27 intervenes between the disc plates 7, 8 and the cam member 6, a predetermined amount of hysteresis torque can be generated when the disc plates 7, 8 and the cam member 6 are relatively rotated with each other.

When, on the other hand, the driving torque of the internal combustion engine is diminished at the deceleration time of the vehicle, there is caused an engine brake, so that the rotational torque is transmitted from the input shaft 21 of the transmission to the boss 5. In the case that the rotational fluctuation caused by the torque fluctuation of the internal combustion engine at the deceleration time of the vehicle is at a small level, the fluctuation torque between the boss 5 and the disc plates 7, 8 is at a small level, so that the boss 5 is relatively twisted to a negative side (R2 direction) with respect to the disc plates 7, 8.

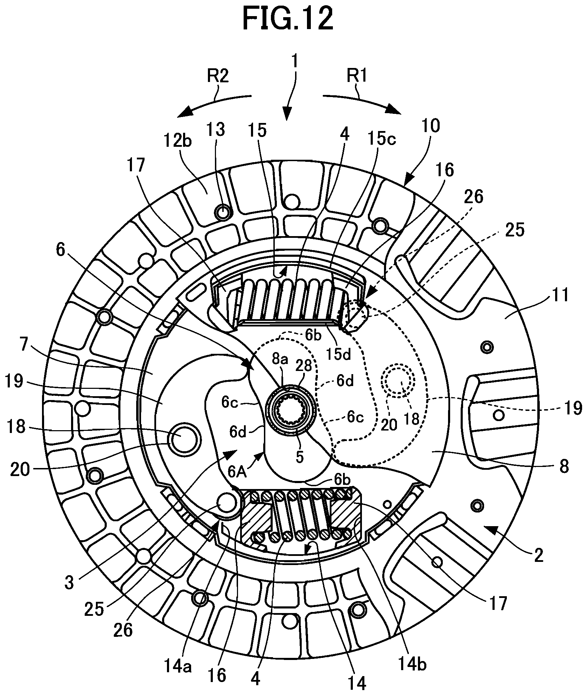

When the disc plates 7, 8 and the boss 5 are relatively rotated with each other as indicated from the state shown in FIG. 1 to the state shown in FIG. 12 at this time, the cam member 6 is rotated as the torsion angle of the disc plates 7, 8 and the boss 5 is increased, so that the one end of the arm member 19 is moved along the cam surface section 6c to the cam surface section 6b.

The curvature of the cam surface section 6c being larger than the curvature of the cam surface section 6b allows the arm member 19 to make a large counter-clockwise rotation through the pin 18 when the one end of the arm member 19 is moved along the cam surface section 6c to the cam surface section 6b.

At this time, the arm member 19 is pressed against the coil spring seat 16 by the cam member 6, so that the coil spring 4 is compressed at the large compression amount.

More specifically, when the one end portion of the arm member 19 is moved from the cam surface section 6c to the cam surface section 6b, the one end portion of the arm member 19 is brought in contact with the cam surface section 6b long in the width direction of the boss 5 and large in curvature over the cam surface section 6d short in the width direction of the boss 5 and small in curvature, so that the compression amount of the coil spring 4 with respect to the torsion angle of the disc plates 7, 8 and the boss 5 is enlarged, thereby causing the rigidity of the arm member 19 to be increased.

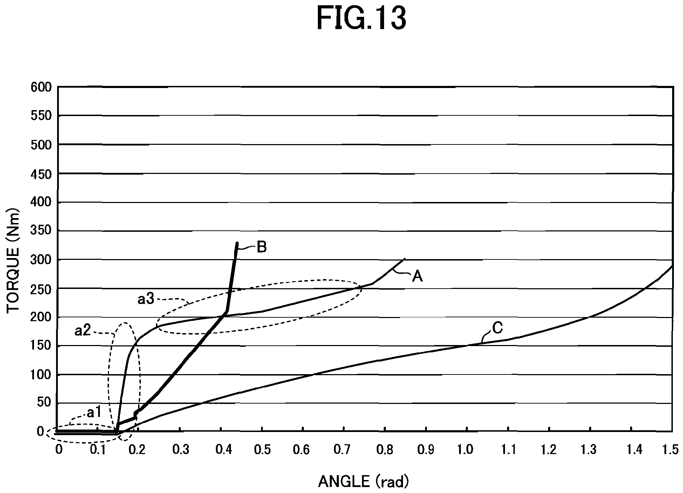

Next, the torsion property of the torsional vibration attenuation apparatus 1 at the acceleration time of the vehicle will be described with reference to Fig. 13. The description of the torsion property at the deceleration time of the vehicle is similar to the torsion property at the deceleration time of the vehicle, and will therefore be omitted hereinafter.

In the area where the torsion angle of the disc plates 7, 8 and the boss 5 is small, the one end portion of the arm member 19 is moved along the cam surface section 6d whose curvature is smaller than the curvature of the cam surface section 6b, so that the rigidity of the coil spring 4 comes to be low, as shown in the area "a1" shown by the arrow "A" in Fig. 13

When the torsion angle of the disc plates 7, 8 and the boss 5 comes to be large, and the one end portion of the arm member 19 is moved from the cam surface section 6d to the cam surface section 6b, the one end portion of the arm member 19 is brought into engagement with the cam surface section 6b long in the width direction of the boss 5 and large in curvature over the cam surface section 6d short in the width direction of the boss 5 and small in curvature, so that the compression amount of the coil spring 4 with respect to the torsion angle of the disc plates 7, 8 and the boss 5 is enlarged, thereby causing the rigidity of the arm member 19 to be increased as shown in the area a2 in FIG. 13.

When the torsion angle of the disc plates 7, 8 and the boss 5 is further increased, the one end of the arm member 19 is moved along the cam surface section 6b of the pivoting cam member 6. At this time, the cam surface section 6b is formed in the shape of circle identical to the outer circumferential sections 52a of the second circle 52, so that the compression amount of the coil spring 4 with respect to the torsion angle of the disc plates 7, 8 and the boss 5 is gently increased, thereby causing the rigidity of the coil spring 4 to be decreased as shown in the area a3 in FIG. 13.

In contrast, the conventional torsional vibration attenuation apparatus disclosed in the Patent Document 1 cannot widen the torsion angle of the disc plates and the boss as shown in the arrow B in FIG. 13 because the rigidity of the coil spring is increased as the torsion angle of the plates and the boss is increased.

Further, the torsional vibration attenuation apparatus disclosed in the Patent Document 2 is capable of widening the torsion angle of the disc plates and the boss, however, the curvature of the contacted surface is maintained constant, thereby leading to causing a twisting property that the deflection amount of the coil spring (rigidity) is gently increased when the boss is being twisted with respect to the disc plates.

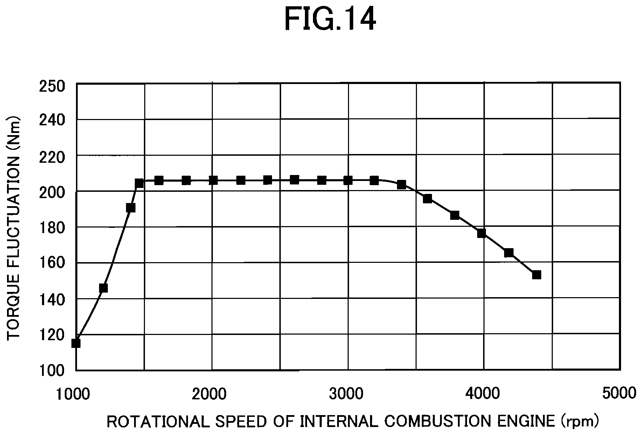

FIG. 14 is a property diagram showing a relationship between the rotational speed and the torque fluctuation of the internal combustion engine. Under this property, it is assumed that the torque is at its peak in the normal rotation area at over 1,500 rpm, and that the torsional resonance of the driving system is generated at around 2,000 rpm.

Under such a property, the torsion property is preferably set to have the torsional rigidity (the rigidity of the coil spring 4) of the torsional vibration attenuation apparatus reduced.

In the present embodiment, the rigidity of the coil spring 4 (the area a3 in FIG. 13) can be reduced by forming the cam member 6 in a peanuts shape and by setting the lengths of radii r1 and r2 of the first circle 51 and the second circle 52 of the cam member 6 to have the one end of the arm member 19 moved along the cam surface section 6b of the cam member 6 in the rotation area of 2,000 rpm, so that the large torsional vibrations originated from the rotational fluctuation caused by the torque fluctuation of the driving source and the torsional resonance in the driving system can be attenuated, thereby making it possible to reduce the chinking noises from the collision of the slipping gear pairs of the transmission gear sets and the muffled noises generated by the torsional resonance of the driving system.

Further, in the area of low rotation speed 1,000 rpm (the area a1 in FIG. 13) as seen from the vehicle shifted into the neutral state at the time of the idling state of the vehicle, the rigidity of the coil spring 14 can be reduced by having the one end of the arm member 19 moved along the cam surface section 6d whose curvature is smaller than the curvature of the cam surface section 6b, so that the torsional vibrations originated from the rotational fluctuation caused by the torque fluctuation in the driving source is attenuated, thereby making it possible to suppress the clattering noises from being caused in the gear pairs of the transmission maintained in the no load state.

Further, as shown in the area 2 in FIG. 13, in the area between the idle area where the clattering noises are generated and the area where the chinking noises and the muffled noises are generated, there is generated neither chinking noises nor muffled noises, thereby making it unnecessary to lower the rigidity of the resilient member.

For this reason, in the present embodiment, the cam member 6 is formed in the shape of a peanuts, and the one end portion of the arm member 19 is brought into engagement with the cam surface section 6b from the cam surface section 6d of the cam member 6, so that the present embodiment is constructed to set such an area where the rigidity of the resilient member 4 is increased by abruptly increasing the deflection amount of the resilient member with respect to the varied amount of the torsion angle of the of the disc plates 7, 8 and the boss 5

The present embodiment thus constructed does not need to have the coil spring 4 gently deformed from the state where the torsion angle of the disc plates 7, 8 and the boss 5 is small to the state where the torsion angle of the disc plates 7, 8 and the boss 5 is large, as compared with the line as shown by the arrow C in FIG. 13, thereby making it possible to suppress the chinking noises and the muffled noises in the normal rotation area of the internal combustion engine without increasing the size of the coil spring 14 taking into consideration the amount of deformation.

As previously explained, in this embodiment, the cam surface 6A of the cam member 6 is formed in such a curved surface in the shape of a peanuts that the outer circumferential sections 51a of the circle 51 and the outer circumferential sections 52a of the pair of second circles 52 connected, the first circle 51 having the center of circle, the rotation axis O1 of the cam member 6, and the radius r1, while each of the pair of circles 52 having the center of circle, the rotation axis 02 spaced apart from the rotation axis O1 in the outward direction of L, and the radius r2, larger than the radius of the circle 1, wherein the curvature of the cam surface sections 6c, 6d continuing from the cam surface section 6a of the outer circumferential section 51 a of the circle 51 to the cam surface section 6b of the outer circumferential section 52a of the circle 52 is smaller than the curvature of the cam surface section 6b of the outer circumferential section 52a of the circle 52, thereby making it possible to attenuate the torsional vibration in necessary areas (the areas where the clattering noises are generated and the areas where the chinking noises and the muffled noises are generated) by lowering the rigidity of the coil spring 4, while reducing the disposition space of the coil spring 4 through reducing the size of the coil spring 4, and thereby to prevent the size of the apparatus as a whole from being increased.

The torsional vibration attenuation apparatus according to the present embodiment is capable of effectively attenuating the torsional vibrations in the necessary areas (the areas where the clattering noises are generated and the areas where the chinking noises and the muffled noises are generated), even in case the coil spring 4 is reduced in size which results in the torsion angle of the disc plates 7, 8 and the boss 5 being widened to about half degree as disclosed in the torsional vibration attenuation apparatus as shown in the Patent Document 2.

Due to the fact that the hysteresis mechanism 27 intervenes between the disc plates 7, 8 and the cam member 6, a predetermined amount of hysteresis torque can be generated when the disc plates 7, 8 and the cam member 6 are relatively rotated with each other.

For this reason, the torsional vibration attenuation apparatus according to the present embodiment thus constructed can generate the hysteresis torque with respect to the large torsional vibrations which are originated from the rotational fluctuation caused by the torque fluctuation of the driving source during the acceleration and deceleration times when the rotational torque transmitted to the boss 5 from the disc plates 7, 8 is at a large level.

As a consequence, the torsional vibration attenuation apparatus according to the present embodiment thus constructed can even further suppress the muffled noises from being generated in the passenger room by even further attenuating the torsional vibrations caused by the torsional resonance of the driving source, as well as can even further suppress the chinking noises.

When the disc plates 7, 8 are inputted with the excessively large torque from the internal combustion engine, the one end portion of the arm member 19 slips over the cam surface 6A to have the disc plates 7, 8 slip with respect to the cam member 6, thereby making it possible to have the cam member 6 function as a torque limiter at the acceleration time of the vehicle.

As a consequence, the torsional vibration attenuation apparatus according to the present embodiment can prevent the excessively large torque from being transmitted from the disc plates 7, 8 to the boss 5, and can protect the transmission gear sets of the transmission.

In the present embodiment, the roller 26c is rotatably disposed at the other one end portion of the arm member 19, so that the other one end portion of the arm member 19 is held in engagement with the spring seat 16 through the roller 26, thereby making it possible to resiliently and circumferentially deform the coil spring 4 with respect to the disc plates 7, 8, while having the other one end portion of the arm member 19 smoothly and circumferentially outwardly slide along the spring seat 16 through the roller 26.

The torsional vibration attenuation apparatus according to the present embodiment is simple in construction only with the coil springs 4, the arm members 19 and the cam member 6 which are provided between the disc plates 7, 8 and the boss 5, thereby making it possible to widen the torsion angle of the disc plates 7, 8 and the boss 5. This means that the construction of the torsional vibration attenuation apparatus can be simplified.

The torsional vibration attenuation apparatus according to the present embodiment is constructed to have the arm members 19 arranged in point symmetrical relationship with each other with respect to the center axis of the disc plates 7, 8, the arm members 19 can sandwich the cam member 6 and support the cam member 6 across the center axis of the disc plates 7, 8.

For this reason, the arm members 19 can sandwich and support the cam member 6 under a strong pressuring force across the center axis of the disc plates 7, 8 by the reaction of the coil springs 4 when the coil springs 4 are urged by the cam member 6 through the arm members 19. As a result, the rotational torque can reliably be transmitted from the disc plates 7, 8 to the boss 5.

Here, the torsion property and the magnitude of the torsion angle caused when the disc plates 7, 8 and the boss 5 are relatively rotated with each other can be set at the desired torsion property and the desired magnitude of the torsion angle by adjusting the shape of the cam surface 6A of the cam member 6 (the radii r1 and r2 of the circles 51 and 52, and the spaced-apart distance between the centers O1 and O2 of the circles 51 and 52), the spring constant of the coil spring 4, and the shape of the arm member 19, and other factors.

While the present embodiment has been explained with the example that the torsional vibration attenuation apparatus 1 intervenes between the internal combustion engine of the vehicle and the driving system having the transmission, the present invention is not limited to this example, but may include any type of torsional vibration attenuation apparatus which is provided in the driving system of the vehicle.

The foregoing torsional vibration attenuation apparatus according to the present invention may be applied for example to a hybrid vehicle having a torsional vibration attenuation apparatus serving as a hybrid damper intervening between the output shaft of the internal combustion engine and a power distribution mechanism for dividing the power to an electric motor and a wheel side output shaft.

Further, the torsional vibration attenuation apparatus according to the present invention may be applied to a torsional vibration attenuation apparatus serving as a lock-up damper intervening between a lock-up clutch apparatus of a torque converter and transmission gear sets. Further, the torsional vibration attenuation apparatus according to the present invention may be provided between a differential case and a ring gear provided on the outer peripheral portion of the differential case.

Each of the previously mentioned embodiments has been raised as an example for explaining the invention, and thus the present invention is not limited to these embodiments. The scope of the present invention is required to be construed based on the claims. All the modifications, the alterations and the equivalents should be included within the scope of the invention defined by the claims.

As has been explained in the above description, the torsional vibration attenuation apparatus according to the present invention has such an excellent advantage that the torsional vibration attenuation apparatus can decrease the size of the resilient member. Especially, the torsional vibration attenuation apparatus according to the present invention has such an excellent advantage that the torsional vibration attenuation apparatus can minimize a space for installation of the resilient member while attenuating the torsional vibrations in necessary areas, and thereby can prevent the size of the apparatus as a whole from being increased. The torsional vibration attenuation apparatus according to the present invention is useful as a torsional vibration attenuation apparatus intervened between the internal combustion engine and the driving system of the vehicle, and so constituted that the first rotation member and the second rotation member are relatively rotatably connected with each other through the resilient member so that the rotation torque is transmitted between the first rotation member and the second rotation member.

### {EXPLANATION OF REFERENCE NUMERALS}

- 1:: torsional vibration attenuation apparatus
- 2:: first rotation member
- 3:: second rotation member
- 4:: coil spring (resilient member)
- 5:: boss (boss portion, second rotation member)
- 6:: cam member (second rotation member)
- 6a:: cam surface
- 7, 8:: disc plate (first rotation member)
- 10:: clutch disc (first rotation member)
- 14, 15:: accommodation window hole (accommodation portion)
- 14c, 15c:: outer support edge portion (accommodation portion)
- 14d, 15d:: inner support edge portion (accommodation portion)
- 16, 17:: spring seat (retaining member, second rotation member)
- 18:: pin (swing fulcrum portion)
- 19:: arm member (torque transmission member)
- 21:: input shaft
- 26:: roller member (roller element)
- 27:: hysteresis mechanism
- 51:: first circle
- 52:: second circle
- r1:: radius of first circle
- r2:: radius of second circle
- O1, O2:: rotation center axis

## Claims

1. A torsional vibration attenuation apparatus (1), comprising:
a first rotation member (2);
a second rotation member (3) disposed in coaxial relationship with the first rotation member (2);
a resilient member (4) disposed between the first rotation member (2) and the second rotation member (3) to be resiliently deformed between the first rotation member (2) and the second rotation member (3) when the first rotation member (2) and the second rotation member (3) are relatively rotated with each other;
a cam member (6) provided on either one of the first rotation member (2) and the second rotation member (3) and having a cam surface (6a) to be integrally rotated with either one of the first rotation member (2) and the second rotation member (3); and
a torque transmission member (19) having one end portion held in contact with the cam surface (6a) of the cam member (6) and the other end portion held in engagement with the end portion of the resilient member (4) to transmit a rotation torque between the first rotation member (2) and the second rotation member (3) by having the one end portion of the torque transmission member (19) moved along the cam surface (6a) to resiliently deform the resilient member (4) when the first rotation member (2) and the second rotation member (3) are relatively rotated with each other,
wherein the torque transmission member (19) is intervened between the cam member (6) and the resilient member (4), and
the cam surface (6a) of the cam member (6) having a curved surface,
the curved surface comprising:
two points of outer circumferential sections (51a) of a first circle (51) provided on a center line extending longitudinally of the cam member (6) to have a center (O1) common to the rotation center axis of the cam member (6), and
outer circumferential sections (52a) forming parts of second circles (52) having respective centers (O2) spaced apart outwardly from the center (O1) of the first circle (51), the two points of outer circumferential sections (51a) of the first circle (51) being linked with the outer circumferential sections (52a) forming parts of the second circles (52),
each of the radii (r2) of the second circles (52) being larger than the radius (r1) of the first circle (51),
wherein the second rotation member (3) has an outer peripheral portion formed with the cam member (6), and an inner peripheral portion formed with a boss member drivably connected with an input shaft (21) forming part of a transmission provided in a driving system of a vehicle, the first rotation member (2) being constituted by a pair of disc plates (7, 8) disposed between the axial both sides of the first rotation member (2) and axially spaced apart at a predetermined interval with each other and fastened to each other, each of the disc plates (7, 8) being formed with an accommodation portion (14, 15) for accommodating therein the resilient member (4), and a pair of retaining members (16, 17) retaining the circumferential both end portions of the resilient member (4) to have the resilient member (4) supported on the circumferential both end portions of the accommodation portion (14, 15), and the other end portion of the torque transmission member (19) being held in engagement with the circumferential one end portion of the resilient member (4) through either one of the retaining members (16, 17),
wherein the torsional vibration attenuation apparatus (1) further comprises a hysteresis mechanism (27) intervening between the cam member (6) and the pair of the disc plates (7, 8) to have the cam member (6) and the pair of the disc plates (7, 8) held in friction contact with each other.

2. The torsional vibration attenuation apparatus (1) as set forth in claim 1, in which the one end portion of the torque transmission member (19) is moved from the cam surfaces of the two points of outer circumferential sections (51a) of the first circle (51) to the cam surfaces of the outer circumferential sections (52a) of the second circles (52) in response to the increased torsion angle of the first rotation member (2) and the second rotation member (3).

3. The torsional vibration attenuation apparatus (1) as set forth in any one of claim 1 and 2, in which the curvatures of the cam surfaces continuing from the cam surfaces of the two points of outer circumferential sections (51a) of the first circle (51) to the cam surfaces of the outer circumferential sections (52a) of the second circles (52) are smaller than the curvatures of the cam surfaces of the outer circumferential sections (52a) of the second circles (52).

4. The torsional vibration attenuation apparatus (1) as set forth in any one of claim 1 to 3, in which the torque transmission member (19) is swingable around a swing fulcrum portion (18) provided on either one of the first rotation member (2) and the second rotation member (3) between the one end portion of the torque transmission member (19) and the other end portion of the torque transmission member (19).

5. The torsional vibration attenuation apparatus (1) as set forth in any one of claim 1 to 4, which comprises two or more torque transmission members (19) disposed in point symmetrical relationship with each other across the center axis of the first rotation member (2).

6. The torsional vibration attenuation apparatus (1) as set forth in claim 1, in which the other end portion of the torque transmission member (19) is provided with a roller element (26) and is held in engagement with one of the pair of retaining members (16, 17) through the roller element (26).

## Patentansprüche

1. Torsionsschwingungsdämpfungsvorrichtung (1), aufweisend:
ein erstes Drehelement (2);
ein zweites Drehelement (3), das sich mit dem ersten Drehelement (2) in einem koaxialen Verhältnis befindet;
ein elastisches Element (4), das sich zwischen dem ersten Drehelement (2) und dem zweiten Drehelement (3) befindet, um zwischen dem ersten Drehelement (2) und dem zweiten Drehelement (3) elastisch verformt zu werden, wenn das erste Drehelement (2) und das zweite Drehelement (3) relativ zueinander gedreht werden;
ein Nockenelement (6), das sich an jedem von dem ersten Drehelement (2) und dem zweiten Drehelement (3) befindet und das eine Nockenlaufbahn (6a) aufweist, um zusammen mit jedem von dem ersten Drehelement (2) und dem zweiten Drehelement (3) gedreht zu werden; und
ein Drehmomentübertragungselement (19) mit einem Endabschnitt, der mit der Nockenlaufbahn (6a) des Nockenelements (6) in Kontakt gehalten wird, wobei der andere Endabschnitt mit dem Endabschnitt des elastischen Elements (4) in Eingriff gehalten wird, um ein Rotationsdrehmoment zwischen dem ersten Drehelement (2) und dem zweiten Drehelement (3) zu übertragen, indem der eine Endabschnitt des Drehmomentübertragungselements (19) entlang der Nockenlaufbahn (6a) bewegt wird, um das elastische Element (4) elastisch zu verformen, wenn das erste Drehelement (2) und das zweite Drehelement (3) relativ zueinander gedreht werden,
wobei das Drehmomentübertragungselement (19) zwischen dem Nockenelement (6) und dem elastischen Element (4) platziert ist, und
wobei die Nockenlaufbahn (6a) des Nockenelements (6) eine gebogene Oberfläche aufweist,
wobei die gebogene Oberfläche aufweist:
zwei Punkte von äußeren Umfangsabschnitten (51 a) eines ersten Kreises (51), der sich auf einer Mittellinie befindet, die längsweise zu dem Nockenelement (6) verläuft, um eine Mitte (O1) aufzuweisen, die der Drehzentrumsachse des Nockenelements (6) entspricht, und
äußere Umfangsabschnitte (52a), die Teile von zweiten Kreisen (52) bilden, die entsprechende Mitten (O2) aufweisen, die nach außen von der Mitte (O1) des ersten Kreises (51) beabstandet sind, wobei die zwei Punkte der äußeren Umfangsabschnitte (51a) des ersten Kreises (51) mit den äußeren Umfangsabschnitten (52a) verbunden sind, die Teile der zweiten Kreise (52) bilden, wobei jeder der Radii (r2) der zweiten Kreise (52) größer ist als der Radius (r1) des ersten Kreises (51),
wobei das zweite Drehelement (3) einen äußeren Randabschnitt, der mit dem Nockenelement (6) ausgebildet ist, und einen inneren Randabschnitt, der mit einem Nabenelement ausgebildet ist, das antreibbar mit einer Eingangswelle (21) verbunden ist, die einen Teil einer Übertragung bildet, die sich in einem Antriebssystem eines Fahrzeugs befindet, aufweist, wobei das erste Drehelement (2) aus einem Paar Scheibenplatten (7, 8) besteht, die sich zwischen den beiden axialen Seiten des ersten Drehelements (2) befinden und mit einem vorgegebenen Intervall zueinander beabstandet und aneinander befestigt sind, wobei jede der Scheibenplatten (7, 8) mit einem Aufnahmeabschnitt (14, 15) zum Aufnehmen des elastischen Elements (4), und einem Paar Halteelemente (16, 17), die die beiden umlaufenden Endabschnitte des elastischen Elements (4) halten, damit das elastische Element (4) an beiden umlaufenden Endabschnitten des Aufnahmeabschnittes (14, 15) getragen ist, ausgebildet ist, und wobei der andere Endabschnitt des Drehmomentübertragungselements (19) mit dem einen umlaufenden Endabschnitt des elastischen Elements (4) durch eines der Halteelemente (16, 17) in Eingriff gehalten wird,
wobei die Torsionsschwingungsdämpfungsvorrichtung (1) ferner einen Hysteresemechanismus (27) aufweist, der sich zwischen dem Nockenelement (6) und dem Paar Scheibenplatten (7, 8) befindet, damit das Nockenelement (6) und das Paar Scheibenplatten (7, 8) in Friktionskontakt gehalten werden.

2. Torsionsschwingungsdämpfungsvorrichtung (1) nach Anspruch 1, wobei der eine Endabschnitt des Drehmomentübertragungselements (19) als Reaktion auf den vergrößerten Torsionswinkel des ersten Drehelements (2) und des zweiten Drehelements (3) von den Nockenlaufbahnen der zweiten Punkte der äußeren Umfangsabschnitte (51a) des ersten Kreises (51) zu den Nockenlaufbahnen der äußeren Umfangsabschnitte (52a) der zweiten Kreise (52) bewegt wird.

3. Torsionsschwingungsdämpfungsvorrichtung (1) nach einem der Ansprüche 1 und 2, wobei die Biegungen der Nockenlaufbahnen von den Nockenlaufbahnen der zwei Punkte der äußeren Umfangsabschnitte (51a) des ersten Kreises (51) zu den Nockenlaufbahnen der äußeren Umfangsabschnitte (52a) der zweiten Kreise (52) kleiner sind als die Biegungen der Nockenlaufbahnen der äußeren Umfangsabschnitte (52a) der zweiten Kreise (52).

4. Torsionsschwingungsdämpfungsvorrichtung (1) nach einem der Ansprüche 1 bis 3, wobei das Drehmomentübertragungselement (19) um einen Drehpunktschwingabschnitt (18) schwingbar ist, der sich auf jedem von dem ersten Drehelement (2) und dem zweiten Drehelement (3) zwischen dem einen Endabschnitt des Drehmomentübertragungselements (19) und dem anderen Endabschnitt des Drehmomentübertragungselements (19) befindet.

5. Torsionsschwingungsdämpfungsvorrichtung (1) nach einem der Ansprüche 1 bis 4, die zwei oder mehrere Übertragungselemente (19) aufweist, die sich über die Mittelachse des ersten Drehelements (2) miteinander in einem punktsymmetrischen Verhältnis befinden.

6. Torsionsschwingungsdämpfungsvorrichtung (1) nach Anspruch 1, wobei der andere Endabschnitt des Drehmomentübertragungselements (19) mit einem Rollenelement (26) versehen ist und mit einem von dem Paar Halteelement (16, 17) durch das Rollenelement (26) in Eingriff gehalten wird.

## Revendications

1. Appareil d'atténuation de vibration de torsion (1) comprenant :
un premier élément de rotation (2) ;
un second élément de rotation (3) disposé en relation coaxiale avec le premier élément de rotation (2) ;
un élément résilient (4) disposé entre le premier élément de rotation (2) et le second élément de rotation (3) pour être déformé de manière résiliente entre le premier élément de rotation (2) et le second élément de rotation (3), lorsque le premier élément de rotation (2) et le second élément de rotation (3) tournent l'un par rapport à l'autre ;
un élément de came (6) prévu sur l'un ou l'autre parmi le premier élément de rotation (2) et le second élément de rotation (3) et ayant une surface de came (6a) à entraîner en rotation de manière solidaire avec l'un ou l'autre parmi le premier élément de rotation (2) et le second élément de rotation (3) ; et
un élément de transmission de couple (19) ayant une partie d'extrémité maintenue en contact avec la surface de came (6a) de l'élément de came (6) et l'autre partie d'extrémité maintenue en mise en prise avec la partie d'extrémité de l'élément résilient (4) pour transmettre un couple de rotation entre le premier élément de rotation (2) et le second élément de rotation (3) en ayant la une partie d'extrémité de l'élément de transmission de couple (19) déplacée le long de la surface de came (6a) pour déformer de manière résiliente l'élément résilient (4) lorsque le premier élément de rotation (2) et le second élément de rotation (3) tournent l'un par rapport à l'autre,
dans lequel l'élément de transmission de couple (19) est étendu entre l'élément de came (6) et l'élément résilient (4), et
la surface de came (6a) de l'élément de came (6) ayant une surface incurvée,
la surface incurvée comprenant :
deux points de sections circonférentielles externes (51a) d'un premier cercle (51) prévus sur une ligne centrale s'étendant longitudinalement de l'élément de came (6) pour avoir un centre (O1) commun à l'axe central de rotation de l'élément de came (6), et
des sections circonférentielles externes (52a) formant des parties de seconds cercles (52) ayant des centres (O2) respectifs espacés vers l'extérieur par rapport au centre (O1) du premier cercle (51), les deux points de sections circonférentielles externes (51a) du premier cercle (51) étant reliés avec les sections circonférentielles externes (52a) formant des parties des seconds cercles (52),
chacun des rayons (r2) des seconds cercles (52) étant plus grand que le rayon (r1) du premier cercle (51),
dans lequel le second élément de rotation (3) a une partie périphérique externe formée avec l'élément de came (6) et une partie périphérique interne formée avec un élément de bossage raccordé par entraînement à un arbre d'entrée (21) faisant partie d'une transmission prévue dans un système d'entraînement d'un véhicule, le premier élément de rotation (2) étant constitué par une paire de plaques d'entraînement (7, 8) disposées entre les deux côtés axiaux du premier élément de rotation (2) et axialement espacées à un intervalle prédéterminé l'une de l'autre et fixées entre elles, chacune des plaques d'entraînement (7, 8) étant formée avec une partie de logement (14, 15) pour y loger l'élément résilient (4) et une paire d'éléments de retenue (16, 17) retenant les deux parties d'extrémité circonférentielles de l'élément résilient (4) pour avoir l'élément résilient (4) supporté sur les deux parties d'extrémité circonférentielles de la partie de logement (14, 15) et l'autre partie d'extrémité de l'élément de transmission de couple (19) étant maintenue en mise en prise avec la une partie circonférentielle de l'élément résilient (4) par le biais de l'un ou l'autre des éléments de retenue (16, 17),
dans lequel l'appareil d'atténuation de vibration de torsion (1) comprend en outre un mécanisme d'hystérésis (27) s'étendant entre l'élément de came (6) et la paire de plaques d'entraînement (7, 8) pour avoir l'élément de came (6) et la paire de plaques d'entraînement (7, 8) maintenus en contact de friction entre eux.

2. Appareil d'atténuation de vibration de torsion (1) selon la revendication 1, dans lequel la une partie d'extrémité de l'élément de transmission de couple (19) est déplacée des surfaces de came des deux points de sections circonférentielles externes (51a) du premier cercle (51) aux surfaces de came des sections circonférentielles externes (52a) des seconds cercles (52) en réponse à l'angle de torsion accru du premier élément de rotation (2) et du second élément de rotation (3).

3. Appareil d'atténuation de vibration de torsion (1) selon l'une quelconque des revendications 1 et 2, dans lequel les courbures des surfaces de came continuant des surfaces de came des deux points de sections circonférentielles externes (51a) du premier cercle (51) aux surfaces de came des sections circonférentielles externes (52a) des seconds cercles (52) sont inférieures aux courbures des surfaces de came des sections circonférentielles externes (52a) des seconds cercles (52).

4. Appareil d'atténuation de vibration de torsion (1) selon l'une quelconque des revendications 1 à 3, dans lequel l'élément de transmission de couple (19) peut osciller autour d'une partie de pivot d'oscillation (18) prévue sur l'un ou l'autre parmi le premier élément de rotation (2) et le second élément de rotation (3) entre la une partie d'extrémité de l'élément de transmission de couple (19) et l'autre partie d'extrémité de l'élément de transmission de couple (19).

5. Appareil d'atténuation de vibration de torsion (1) selon l'une quelconque des revendications 1 à 4, qui comprend deux éléments de transmission de couple (19) ou plus disposés en relation symétrique par points entre eux d'un côté à l'autre de l'axe central du premier élément de rotation (2).

6. Appareil d'atténuation de vibration de torsion (1) selon la revendication 1, dans lequel l'autre partie d'extrémité de l'élément de transmission de couple (19) est prévue avec un élément de rouleau (26) et est maintenue en mise en prise avec l'un de la paire d'éléments de retenue (16, 17) par le biais de l'élément de rouleau (26).
